(19) Europäisches Patentamt / European Patent Office / Office européen des brevets

(11) **EP 4 005 980 A1**

(12) **EUROPEAN PATENT APPLICATION**
published in accordance with Art. 153(4) EPC

(43) Date of publication:
**01.06.2022 Bulletin 2022/22**

(21) Application number: **20846389.3**

(22) Date of filing: **18.06.2020**

(51) International Patent Classification (IPC):
$C01G\ 53/00^{(2006.01)}$    $H01M\ 4/13^{(2010.01)}$
$H01M\ 4/505^{(2010.01)}$    $H01M\ 4/525^{(2010.01)}$
$H01M\ 10/052^{(2010.01)}$

(52) Cooperative Patent Classification (CPC):
**C01G 53/00; H01M 4/13; H01M 4/505;**
**H01M 4/525; H01M 10/052;** Y02E 60/10

(86) International application number:
**PCT/JP2020/024000**

(87) International publication number:
**WO 2021/019943 (04.02.2021 Gazette 2021/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.07.2019 JP 2019139866**

(71) Applicant: **Panasonic Intellectual Property**
**Management Co., Ltd.**
**Osaka-shi, Osaka 540-6207 (JP)**

(72) Inventors:
• **INOUE, Katsuya**
  **Osaka 540-6207 (JP)**
• **OGASAWARA, Takeshi**
  **Osaka 540-6207 (JP)**

(74) Representative: **Vigand, Philippe et al**
**Novagraaf International SA**
**Chemin de l'Echo 3**
**1213 Onex - Genève (CH)**

(54) **NON-AQUEOUS ELECTROLYTE SECONDARY BATTERY**

(57) In this non-aqueous electrolyte secondary battery, a positive electrode comprises, as a positive electrode active material, a lithium-transition metal compound oxide containing Ni, Nb, and an optional component, Co. The content of Ni in the lithium-transition metal compound oxide is 80 mol% or more relative to the total molar number of metallic elements excluding Li, the content of Nb is 0.35 mol% or less relative to the total molar number of metallic elements excluding Li, and the content of Co is 5 mol% or less relative to the total molar number of metallic elements excluding Li. A negative electrode has a negative electrode mixture layer containing a negative electrode active material, and a film containing Nb formed on a surface of the negative electrode mixture layer. The content of Nb in the film relative to the total mass of the negative electrode mixture layer and the film is 10 to 3000 ppm.

EP 4 005 980 A1

# Figure 1

**Description**

TECHNICAL FIELD

The present disclosure generally relates to a non-aqueous electrolyte secondary battery, and more particularly to a non-aqueous electrolyte secondary battery including a lithium-transition metal composite oxide containing Ni as a positive electrode active material.

BACKGROUND ART

In recent years, a lithium-transition metal composite oxide with a high Ni content has attracted attention as a positive electrode active material with a high energy density. Patent Literature 1, for example, discloses a positive electrode active material comprising a lithium-transition metal composite oxide represented by the general formula $Li_xNi_{1-y-z-v-w}Co_yAl_zM^1_vM^2_wO_2$, where in the formula the element $M^1$ is at least one selected from the group consisting of Mn, Ti, Y, Nb, Mo, and W, and the element $M^2$ is at least Mg or Ca. Patent Literature 2 discloses a lithium-transition metal composite oxide containing Ni, Mn, and Co, the composite oxide containing at least one selected from the group consisting of Mo, W, Nb, Ta, and Re. The amount of Co used is required to be reduced because Co is expensive.

CITATION LIST

PATENT LITERATURE

PATENT LITERATURE 1: Japanese Unexamined Patent Application Publication No. 2006-310181
PATENT LITERATURE 2: Japanese Unexamined Patent Application Publication No. 2009-289726

SUMMARY

In the lithium-transition metal composite oxide with a high Ni content, reducing a Co content destabilizes the structure of the composite oxide to be likely to cause a side reaction with an electrolyte on a particle surface of the composite oxide. Thus, it is considered that a large amount of decomposition products of the electrolyte are generated and a coating of the decomposition product is formed on a surface of a negative electrode to deteriorate charge-discharge cycle characteristics of a battery. The art disclosed in Patent Literatures 1 and 2 has still a room for improvement in the cycle characteristics.
An object of the present disclosure is to inhibit lowering in capacity during charge and discharge in a non-aqueous electrolyte secondary battery using a lithium-transition metal composite oxide with a high Ni content and a low Co content as a positive electrode active material.
A non-aqueous electrolyte secondary battery of an aspect of the present disclosure is a non-aqueous electrolyte secondary battery, comprising: a positive electrode; a negative electrode; and a non-aqueous electrolyte, wherein the positive electrode includes a lithium-transition metal composite oxide containing Ni, Nb, and Co that is an optional component. In the lithium-transition metal composite oxide, a content of Ni is 80 mol% or more based on a total number of moles of metal elements excluding Li, a content of Nb is 0.35 mol% or less based on the total number of moles of metal elements excluding Li, and a content of Co is 5 mol% or less based on the total number of moles of metal elements excluding Li. The negative electrode has: a negative electrode mixture layer including a negative electrode active material; and a coating containing Nb formed on a surface of the negative electrode mixture layer, and a content of Nb in the coating based on a total mass of the negative electrode mixture layer and the coating is 10 ppm to 3000 ppm.
An aspect of the present disclosure may inhibit a lowering in capacity during charge and discharge in a non-aqueous electrolyte secondary battery using a lithium-transition metal composite oxide with a high Ni content and a low Co content as a positive electrode active material. The non-aqueous electrolyte secondary battery according to the present disclosure has excellent charge-discharge cycle characteristics.

BRIEF DESCRIPTION OF DRAWING

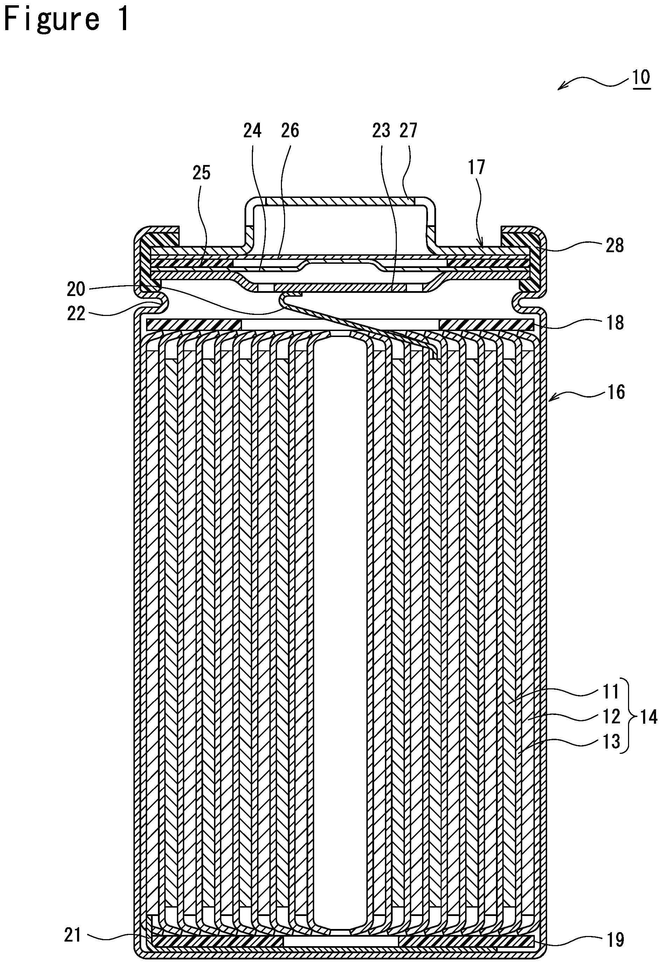

FIG. 1 is a sectional view of a non-aqueous electrolyte secondary battery of an example of an embodiment.

DESCRIPTION OF EMBODIMENTS

As described above, it is considered that a lithium-transition metal composite oxide with a high Ni content and a low Co content has an unstable structure to be likely to cause a side reaction with an electrolyte on a particle surface, resulting in deterioration of the charge-discharge cycle characteristics of a battery. The present inventors have found that using a lithium-transition metal composite oxide containing a specific amount of Nb forms, on the surface of a negative electrode, a good coating containing Nb derived from a positive electrode to improve the charge-discharge cycle characteristics. The effect of improving the cycle characteristics is particularly remarkable under a high voltage.

It is to be noted that, when conventional lithium-transition metal composite oxides are used, a decomposition product of an electrolyte is likely to form a coating containing a large amount of Li on a surface of a negative electrode, and the coating is presumed to be a cause of deterioration of charge-discharge cycle characteristics. In the non-aqueous electrolyte secondary battery according to the present disclosure, it is considered that forming such a coating is inhibited, and alternatively, a good coating containing Nb is formed on the surface of the negative electrode to significantly improve the charge-discharge cycle characteristics.

The description "a numerical value (A) to a numerical value (B)" herein means the numerical value (A) or more and the numerical value (B) or less.

Hereinafter, an example of an embodiment of a positive electrode active material for the non-aqueous electrolyte secondary battery according to the present disclosure and the non-aqueous electrolyte secondary battery using the positive electrode active material will be described in detail. Hereinafter, a cylindrical battery in which a wound electrode assembly 14 is housed in a bottomed cylindrical exterior housing can 16 will be exemplified, but an exterior housing body is not limited to a cylindrical exterior housing can and may be, for example, a rectangular exterior housing can and may be an exterior housing body constituted of laminated sheets including a metal layer and a resin layer. The electrode assembly may be a stacked electrode assembly in which a plurality of positive electrodes and a plurality of negative electrodes are alternatively stacked with separators interposed therebetween.

FIG. 1 is a sectional view of a non-aqueous electrolyte secondary battery 10 of an example of an embodiment. As exemplified in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted solvent in which at least some hydrogens in these solvents are substituted with halogen atoms such as fluorine. For the electrolyte salt, a lithium salt such as $LiPF_6$ is used, for example. The electrolyte is not limited to a liquid electrolyte, and may be a solid electrolyte using a gel polymer or the like.

Any of the positive electrode 11, negative electrode 12, and separator 13 constituting the electrode assembly 14 is a band-shaped elongated body, and spirally wound to be alternatively stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to, for example, sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved part 22 in which a part of a side part thereof projects inside for supporting the sealing assembly 17 is formed. The grooved part 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved part 22 and with an end part of the opening of the exterior housing can 16 calked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected each other. The lower vent member 24 and the upper vent member 26 are connected at each of central parts thereof, and the insulating member 25 is interposed between each of the circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, negative electrode 12, and separator 13, which constitute the electrode assembly 14, particularly the positive electrode active material constituting the positive electrode 11, will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum, a film in which such a metal is disposed on a surface layer thereof, and the like may be used. The positive electrode mixture layer includes a positive electrode active material, a binder, and a conductive agent, and is preferably provided on both surfaces of the positive electrode core except for a portion to which the positive electrode lead 20 is connected. The positive electrode 11 may be produced by, for example, applying a positive electrode mixture slurry including the positive electrode active material, the binder, the conductive agent, and the like on the surface of the positive electrode core, drying and subsequently compressing the applied film to form the positive electrode mixture layers on both the surfaces of the positive electrode core.

Examples of the conductive agent included in the positive electrode mixture layer may include a carbon material such as carbon black, acetylene black, Ketjenblack, and graphite. Examples of the binder included in the positive electrode mixture layer may include a fluororesin such as polytetrafluoroethylene (PTFE) and polyvinylidene fluoride (PVdF), polyacrylonitrile (PAN), a polyimide, an acrylic resin, and a polyolefin. With these resins, a cellulose derivative such as carboxymethyl cellulose (CMC) or a salt thereof, polyethylene oxide (PEO), and the like may be used in combination.

The positive electrode 11 includes a lithium-transition metal composite oxide containing Ni, Nb, and Co that is an optional component. Hereinafter, for convenience of description, the lithium-transition metal composite oxide is referred to as "composite oxide (Z)". The composite oxide (Z) functions as the positive electrode active material. The composite oxide (Z) has a layered structure, and has, for example, a layered structure belonging to the space group R-3m or a layered structure belonging to the space group C2/m. The positive electrode active material is mainly composed of the composite oxide (Z), and may be composed of substantially only the composite oxide (Z). The positive electrode active material may include a composite oxide other than the composite oxide (Z) or another compound within a range in that an object of the present disclosure is not impaired.

The composite oxide (Z) contains 80 mol% or more of Ni based on a total number of moles of metal elements excluding Li. A Ni content of 80 mol% or more may yield a battery with a high energy density. In the composite oxide (Z), the Ni content is 80 mol% or more based on the total number of moles of metal elements excluding Li, and a Nb content is 0.35 mol% or less based on the total number of moles of metal elements excluding Li. The Ni content may be 85 mol% or more or may be 90 mol% or more based on the total number of moles of metal elements excluding Li.

When the composite oxide (Z) contains Co, a Co content is 5 mol% or less based on the total number of moles of metal elements excluding Li. The amount of Co used is preferably reduced because Co is expensive. The composite oxide (Z) preferably contains 2 mol% or less of Co based on the total number of moles of metal elements excluding Li or contains substantially no Co. The description "contain substantially no Co" means a case where Co is absolutely not contained and a case where Co is mixed as an impurity (a case where an amount of Co that cannot be precisely quantified is mixed).

The Nb content in the composite oxide (Z) is, as above, 0.35 mol% or less and preferably 0.30 mol% or less based on the total number of moles of metal elements excluding Li. The composite oxide (Z) containing Nb may yield the effect of improving the charge-discharge cycle characteristics, and the Nb content is preferably 0.05 mol% or more. In this case, the effect of improving the charge-discharge cycle characteristics appears more obviously. A Nb content of more than 0.35 mol% increases the resistance to lower the charge capacity.

In the composite oxide (Z), Nb preferably forms a solid solution with other metal elements such as Ni. In the composite oxide (Z), 20% or more of Nb is preferably dissolved in the composite oxide, 80% or more of Nb is more preferably dissolved in the composite oxide, and substantially all of Nb is particularly preferably dissolved. The amount of Nb dissolved may be measured with energy dispersive X-ray spectroscopy (EDS). Nb contained in the composite oxide (Z), which is a Nb source of the coating formed on the surface of the negative electrode, is partially eluted by charging and discharging, and deposited on the surface of the negative electrode to be contained in the coating of the negative electrode.

The composite oxide (Z) may contain a metal element other than Li, Ni, Nb, and Co. Examples of the metal element may include Mn, Al, Zr, B, Mg, Fe, Cu, Zn, Sn, Na, K, Ba, Sr, Ca, W, Mo, and Si. Among them, the composite oxide (Z) preferably contains at least one of Mn and Al. When the composite oxide (Z) contains Mn, a Mn content is preferably 1 to 10 mol% based on the total number of moles of metal elements excluding Li. When the composite oxide (Z) contains Al, an Al content is preferably 1 to 10 mol% based on the total number of moles of metal elements excluding Li.

A preferable example of the composite oxide (Z) is a composite oxide represented by the general formula $Li_aNi_bCo_cAl_dMn_eNb_fO_g$ (in the formula, $0.8 \leq a \leq 1.2$, $0.80 \leq b < 1$, $0 \leq c \leq 0.05$, $0 \leq d \leq 0.10$, $0 \leq e \leq 0.10$, $0 < Nb \leq 0.0035$, and $1 \leq f \leq 2$). It is preferably $0.85 \leq b < 1$, $0 \leq c \leq 0.02$, and $0 < Nb \leq 0.0030$, and more preferably $0.85 \leq b < 0.95$, $0 \leq c \leq 0.01$, and $0.0005 \leq Nb \leq 0.0030$.

Contents of the elements constituting the composite oxide (Z) may be measured with an inductively coupled plasma atomic emission spectroscopy analyzer (ICP-AES), an electron probe micro analyzer (EPMA), an energy dispersive X-ray analyzer (EDX), or the like.

The composite oxide (Z) is, for example, of secondary particles formed by aggregating primary particles. A particle diameter of the primary particles is typically 0.05 μm to 1 μm. A median diameter (D50) on a volumetric basis of the composite oxide (Z) is, for example, 3 μm to 30 μm, and preferably 5 μm to 25 μm. The D50 on a volumetric basis, also referred to as a median diameter, means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

The composite oxide (Z) may be synthesized by, for example, mixing a compound containing Ni, Al, Mn, and the like, a compound containing Nb, and a Li source such as lithium hydroxide (LiOH) to be calcinated. The compound containing Ni, Al, Mn, and the like and the compound containing Nb may be mixed and calcinated to synthesize a composite oxide containing Ni and Nb, and then the Li source may be added to be calcinated again. An example of Nb-containing compound includes niobium hydroxide, niobium oxide, lithium niobate, and niobium chloride. The calcination is performed, for example, under an oxygen atmosphere and at a temperature of 600°C to 800°C.

[Negative Electrode]

The negative electrode 12 has a negative electrode core and a negative electrode mixture layer provided on a surface of the negative electrode core. For the negative electrode core, a foil of a metal stable within a potential range of the negative electrode 12, such as copper, a film in which such a metal is disposed on a surface layer thereof, and the like may be used. The negative electrode mixture layer includes a negative electrode active material and a binder, and is preferably provided on, for example, both surfaces of the negative electrode core except for a portion to which the negative electrode lead 21 is connected. The negative electrode 12 may be produced by, for example, applying a negative electrode mixture slurry including the negative electrode active material, the binder, and the like on the surface of the negative electrode core, drying and subsequently compressing the applied film to form the negative electrode mixture layers on both the surfaces of the negative electrode core.

The negative electrode mixture layer includes, for example, a carbon-based active material to reversibly occlude and release lithium ions, as the negative electrode active material. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the binder included in the negative electrode mixture layer, a fluororesin, PAN, a polyimide, an acrylic resin, a polyolefin, and the like may be used similar to that in the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

The negative electrode 12 has a coating formed on a surface of the negative electrode mixture layer and containing Nb (hereinafter, which may be referred to as "negative electrode coating"). The negative electrode coating is considered to be formed by deposition of Nb in the composite oxide (Z), eluted by charging and discharging, on the surface of the negative electrode mixture layer. That is, the negative electrode coating contains Nb derived from the composite oxide (Z). The negative electrode coating is formed by, for example, charges and discharges in 10 cycles or fewer. Use of the composite oxide (Z) containing a specific amount of Nb and formation of a good coating containing Nb derived from the positive electrode on the surface of the negative electrode inhibit a lowering in capacity during charge and discharge to yield good cycle characteristics. The negative electrode coating may be detected by, for example, X-ray photoelectron spectroscopy analysis (XPS).

The content of Nb in the negative electrode coating is 10 ppm to 3000 ppm based on a total mass of the negative electrode mixture layer and the coating. With the content of Nb of less than 10 ppm or more than 3000 ppm, the effect of improving the charge-discharge cycle characteristics is not obtained. The content of Nb in the negative electrode coating may be regulated with a composition of the composite oxide (Z), particularly the Nb content, a charge-discharge condition, or the like. For example, a higher charge termination voltage and a deeper discharge depth tend to increase in the content of Nb.

The negative electrode coating may further contain Ni. Ni in the composite oxide (Z), eluted by charging and discharging, is considered to be deposited with Nb on the surface of the negative electrode mixture layer to form the negative electrode coating. That is, the negative electrode coating contains Ni derived from the composite oxide (Z). A mass ratio of Nb to Ni in the coating (Nb/Ni) is preferably 0.3 to 2. The Nb/Ni ratio within the aforementioned range may enhance the effect of improving the cycle characteristics. The Nb/Ni ratio may be regulated with a composition of the composite oxide (Z), particularly a content ratio of Nb and Ni, a charge-discharge condition, or the like.

The negative electrode coating may contain a metal element other than Nb and Ni. The negative electrode coating includes, for example, a metal element such as Nb and Ni, and an organic compound being a decomposition product of the electrolyte. The contents of Nb and Ni and mass ratio of Nb/Ni in the negative electrode coating may be determined by unpacking a battery after charge and discharge to take the negative electrode, dissolving the negative electrode mixture layer, and analyzing the solution with ICP-AES.

[Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene and polypropylene, cellulose, and the like are preferable. The separator 13 may have any of a single-layered structure and a multilayered structure. On a surface of the separator, a heat-resistant layer and the like may be formed.

EXAMPLES

Hereinafter, the present disclosure will be further described with Examples, but the present disclosure is not limited to these Examples.

<Example 1>

[Synthesis of Lithium-Transition Metal Composite Oxide (Positive Electrode Active Material)]

A composite oxide represented by the general formula $Ni_{0.84}Co_{0.01}Al_{0.052}Mn_{0.098}O_2$ and niobium hydroxide ($Nb_2O_5 \cdot nH_2O$) were mixed so that a Nb content was 0.05 mol% based on a total amount of Ni, Co, Al, and Mn in the composite oxide, and then lithium hydroxide (LiOH) was mixed so that a molar ratio of the total amount of Ni, Co, Al, Mn, and Nb to Li was 1:1.03. The mixture was fed into a calcinating furnace, and calcinated under an oxygen flow of an oxygen concentration of 95% (a flow rate of 2 mL/min per 10 $cm^3$ and 5 L/min per 1 kg of the mixture) at a heating rate of 2.0°C/min from a room temperature to 650°C. Then, the mixture was calcinated at a heating rate of 0.5°C/min from 650°C to 715°C, and the calcinated product was washed with water to obtain a lithium-transition metal composite oxide. A composition of the lithium-transition metal composite oxide was analyzed with ICP-AES, and was $Li_{0.973}Ni_{0.8396}Co_{0.0100}Al_{0.0520}Mn_{0.0980}Nb_{0.0005}O_2$.

[Production of Positive Electrode]

The above lithium-transition metal composite oxide was used as the positive electrode active material. The positive electrode active material, acetylene black, and polyvinylidene fluoride (PVdF) were mixed at a solid-content mass ratio of 95:3:2, an appropriate amount of N-methyl-2-pyrrolidone (NMP) was added, and then the mixture was kneaded to prepare a positive electrode mixture slurry. This positive electrode mixture slurry was applied on both surfaces of a positive electrode core made of aluminum foil, the applied film was dried, and then rolled using a roller and cut to a predetermined electrode size to obtain a positive electrode in which the positive electrode mixture layer was formed on both the surfaces of the positive electrode core. An exposed part where a surface of the positive electrode core was exposed was provided at a part of the positive electrode.

[Production of Negative Electrode]

Natural graphite was used as the negative electrode active material. The negative electrode active material, carboxymethyl cellulose sodium salt (CMC-Na), and styrene-butadiene rubber (SBR) were mixed at a solid-content mass ratio of 100:1:1 in an aqueous solution to prepare a negative electrode mixture slurry. This negative electrode mixture slurry was applied on both surfaces of a negative electrode core made of copper foil, the applied film was dried, and then rolled using a roller and cut to a predetermined electrode size to obtain a negative electrode in which the negative electrode mixture layer was formed on both the surfaces of the negative electrode core. An exposed part where a surface of the negative electrode core was exposed was provided at a part of the negative electrode.

[Preparation of Non-Aqueous Electrolyte]

Into a mixed solvent of ethylene carbonate (EC), methyl ethyl carbonate (MEC), and dimethyl carbonate (DMC) at a volume ratio of 3:3:4, lithium hexafluorophosphate ($LiPF_6$) was dissolved at a concentration of 1.2 mol/litter to prepare a non-aqueous electrolyte liquid.

[Production of Test Cell (Non-Aqueous Electrolyte Secondary Battery)]

An aluminum lead was attached to the exposed part of the positive electrode, a nickel lead was attached to the exposed part of the negative electrode, the positive electrode and the negative electrode were spirally wound with a separator made of polyolefin interposed therebetween to produce a wound electrode assembly. This electrode assembly was housed in an exterior housing body composed of an aluminum laminated sheet, the above non-aqueous electrolyte liquid was injected thereinto, and an opening of the exterior housing body was sealed to obtain a test cell.
On the test cell, each of the Nb content and Nb/Ni ratio in the coating formed on the surface of the negative electrode and a capacity maintenance rate after a cycle test was evaluated by the following method, and the evaluation results are shown in Tables 1A and 1B (the same applies to test cells of Examples, Comparative Examples, and Reference Examples, described below).

[Evaluation of Negative Electrode Coating]

A test cell after a cycle test, described below, was unpacked to take the negative electrode, and the negative electrode mixture layer was dissolved to determine the Nb content and Nb/Ni ratio in the coating formed on the surface of the negative electrode mixture layer with ICP-AES. The Nb content in the coating was 98 ppm based on a total mass of the negative electrode mixture layer and the coating. The Nb/Ni ratio in the coating was 0.30.

[Evaluation of Capacity Maintenance Rate after Cycle Test]

The test cell was charged at a constant current of 0.5 It until a battery voltage reached 4.1 V under a temperature environment of 25°C, and charged at a constant voltage of 4.1 V until a current value reached 1/50 It. Then, the test cell was discharged at a constant current of 0.5 It until a battery voltage reached 2.85 V. This charge-discharge cycle was repeated 100 times. In the cycle test, a discharge capacity at the 1st cycle and a discharge capacity at the 100th cycle were determined, and the capacity maintenance rate was calculated with the following formula.

$$\text{Capacity Maintenance Rate (\%)} = (\text{Discharge Capacity at 100th Cycle / Discharge Capacity at 1st Cycle}) \times 100$$

<Example 2>

A test cell was produced in the same manner as in Example 1 except that a composite oxide represented by the general formula $Ni_{0.84}Co_{0.008}Al_{0.052}Mn_{0.1}O_2$ was used, and the composite oxide and $Nb_2O_5 \cdot nH_2O$ were mixed so that the Nb content was 0.15 mol% in the synthesis of the positive electrode active material, and the performance was evaluated.

<Example 3>

A test cell was produced in the same manner as in Example 1 except that a composite oxide represented by the general formula $Ni_{0.88}Co_{0.01}Al_{0.052}Mn_{0.058}O_2$ was used, and the composite oxide and $Nb_2O_5 \cdot nH_2O$ were mixed so that the Nb content was 0.12 mol% in the synthesis of the positive electrode active material, and the performance was evaluated.

<Example 4>

A test cell was produced in the same manner as in Example 3 except that the composite oxide and $Nb_2O_5 \cdot nH_2O$ were mixed so that the Nb content was 0.20 mol% in the synthesis of the positive electrode active material, and the performance was evaluated.

<Example 5>

A test cell was produced in the same manner as in Example 1 except that a composite oxide represented by the general formula $Ni_{0.9}Co_{0.01}Al_{0.052}Mn_{0.038}O_2$ was used, and the composite oxide and $Nb_2O_5 \cdot nH_2O$ were mixed so that the Nb content was 0.22 mol% in the synthesis of the positive electrode active material, and the performance was evaluated.

<Example 6>

A test cell was produced in the same manner as in Example 1 except that a composite oxide represented by the general formula $Ni_{0.9}Al_{0.05}Mn_{0.05}O_2$ was used, and the composite oxide and $Nb_2O_5 \cdot nH_2O$ were mixed so that the Nb content was 0.25 mol% in the synthesis of the positive electrode active material, and the performance was evaluated.

<Example 7>

A test cell was produced in the same manner as in Example 6 except that a composite oxide represented by the general formula $Ni_{0.912}Al_{0.05}Mn_{0.038}O_2$ was used in the synthesis of the positive electrode active material, and the performance was evaluated.

<Example 8>

A test cell was produced in the same manner as in Example 6 except that a composite oxide represented by the general formula $Ni_{0.915}Al_{0.055}Mn_{0.03}O_2$ was used in the synthesis of the positive electrode active material, and the performance was evaluated.

<Example 9>

A test cell was produced in the same manner as in Example 1 except that a composite oxide represented by the general formula $Ni_{0.92}Al_{0.057}Mn_{0.023}O_2$ was used, and the composite oxide and $Nb_2O_5 \cdot nH_2O$ were mixed so that the Nb content was 0.20 mol% in the synthesis of the positive electrode active material, and the performance was evaluated.

<Example 10>

A test cell was produced in the same manner as in Example 1 except that a composite oxide represented by the general formula $Ni_{0.92}Al_{0.055}Mn_{0.025}O_2$ was used, and the composite oxide and $Nb_2O_5 \cdot nH_2O$ were mixed so that the Nb content was 0.31 mol% in the synthesis of the positive electrode active material. The voltage range of the charge and discharge in the cycle test was changed to 4.2 V to 2.5 V.

<Example 11>

A test cell was produced in the same manner as in Example 1 except that a composite oxide represented by the general formula $Ni_{0.93}Al_{0.057}Mn_{0.013}O_2$ was used, and the composite oxide and $Nb_2O_5 \cdot nH_2O$ were mixed so that the Nb content was 0.34 mol% in the synthesis of the positive electrode active material. The voltage range of the charge and discharge in the cycle test was changed to 4.2 V to 2.5 V.

<Comparative Example 1>

A test cell was produced in the same manner as in Example 1 except that no $Nb_2O_5$ was added in the synthesis of the positive electrode active material, and the performance was evaluated.

<Comparative Example 2>

A test cell was produced in the same manner as in Example 3 except that no $Nb_2O_5$ was added in the synthesis of the positive electrode active material, and the performance was evaluated.

<Comparative Example 3>

A test cell was produced in the same manner as in Example 6 except that no $Nb_2O_5$ was added in the synthesis of the positive electrode active material, and the performance was evaluated.

<Comparative Example 4>

A test cell was produced in the same manner as in Example 7 except that no $Nb_2O_5$ was added in the synthesis of the positive electrode active material, and the performance was evaluated.

<Comparative Example 5>

A test cell was produced in the same manner as in Example 8 except that no $Nb_2O_5$ was added in the synthesis of the positive electrode active material, and the performance was evaluated.

<Comparative Example 6>

A test cell was produced in the same manner as in Example 9 except that no $Nb_2O_5$ was added in the synthesis of the positive electrode active material, and the performance was evaluated.

<Comparative Example 7>

A test cell was produced in the same manner as in Example 9 except that no $Nb_2O_5$ was added in the synthesis of the positive electrode active material. The voltage range of the charge and discharge in the cycle test was changed to 4.2 V to 2.5 V.

<Comparative Example 8>

A test cell was produced in the same manner as in Example 11 except that no $Nb_2O_5$ was added in the synthesis of the positive electrode active material, and the performance was evaluated.

<Reference Example 1>

A test cell was produced in the same manner as in Example 1 except that a composite oxide represented by the general formula $Ni_{0.6}Co_{0.2}Mn_{0.2}O_2$ was used, and no $Nb_2O_5$ was added in the synthesis of the positive electrode active material, and the performance was evaluated.

<Reference Example 2>

A test cell was produced in the same manner as in Reference Example 1 except that $Nb_2O_5 \cdot nH_2O$ was added so that the Nb content was 0.25 mol% in the synthesis of the positive electrode active material, and the performance was evaluated.

<Reference Example 3>

A test cell was produced in the same manner as in Example 1 except that a composite oxide represented by the general formula $Ni_{0.7}Co_{0.2}Al_{0.01}Mn_{0.09}O_2$ was used, and no $Nb_2O_5$ was added in the synthesis of the positive electrode active material. The voltage range of the charge and discharge in the cycle test was changed to 4.2 V to 2.5 V.

EP 4 005 980 A1

<Reference Example 4>

A test cell was produced in the same manner as in Reference Example 3 except that $Nb_2O_5 \cdot nH_2O$ was added so that the Nb content was 0.25 mol% in the synthesis of the positive electrode active material, and the performance was evaluated.

[Table 1A]

|  | Positive Electrode Active Material | | | | | Negative Electrode Coating | | Cycle Test | |
|---|---|---|---|---|---|---|---|---|---|
|  | Ni | Co | Al | Mn | Nb (Externally Added) | Nb Content | Nb/Ni | Voltage Range | Capacity Maintenance Rate |
| Example 1 | 84.0 | 1.0 | 5.2 | 9.8 | 0.05 | 98ppm | 0.30 | 4.1-2.85V | 90.1 |
| Example 2 | 84.0 | 0.8 | 5.2 | 10.0 | 0.15 | 201ppm | 0.63 | 4.1-2.85V | 93.5 |
| Example 3 | 88.0 | 1.0 | 5.2 | 5.8 | 0.12 | 116ppm | 0.34 | 4.1-2.85V | 89.2 |
| Example 4 | 88.0 | 1.0 | 5.2 | 5.8 | 0.20 | 193ppm | 0.55 | 4.1-2.85V | 92.8 |
| Example 5 | 90.0 | 1.0 | 5.2 | 3.8 | 0.22 | 179ppm | 0.47 | 4.1-2.85V | 92.0 |
| Example 6 | 90.0 | - | 5.0 | 5.0 | 0.25 | 211ppm | 0.52 | 4.1-2.85V | 92.9 |
| Example 7 | 91.2 | - | 5.0 | 3.8 | 0.25 | 352ppm | 0.82 | 4.1-2.85V | 92.0 |
| Example 8 | 91.5 | - | 5.5 | 3.0 | 0.25 | 203ppm | 0.43 | 4.1-2.85V | 88.4 |
| Example 9 | 92.0 | - | 5.7 | 2.3 | 0.20 | 301ppm | 0.58 | 4.1-2.85V | 91.2 |
| Example 10 | 92.0 | - | 5.5 | 2.5 | 0.31 | 1571ppm | 1.74 | 4.2-2.5V | 87.1 |
| Example 11 | 93.0 | - | 5.7 | 1.3 | 0.34 | 2978ppm | 1.99 | 4.2-2.5V | 92.0 |

[Table 1B]

|  | Positive Electrode Active Material | | | | | Negative Electrode Coating | | Cycle Test | |
|---|---|---|---|---|---|---|---|---|---|
|  | Ni | Co | Al | Mn | Nb (Externally Added) | Nb Content | Nb/Ni | Voltage Range | Capacity Maintenance Rate |
| Comparative Example 1 | 84.0 | 1.0 | 5.2 | 9.8 | - | - | - | 4.1-2.85V | 87.6 |
| Comparative Example 2 | 88.0 | 1.0 | 5.2 | 5.8 | - | - | - | 4.1-2.85V | 84.0 |
| Comparative Example 3 | 90.0 | - | 5.0 | 5.0 | - | - | - | 4.1-2.85V | 82.1 |

11

(continued)

| | Positive Electrode Active Material | | | | | Negative Electrode Coating | | Cycle Test | |
|---|---|---|---|---|---|---|---|---|---|
| | Ni | Co | Al | Mn | Nb (Externally Added) | Nb Content | Nb/Ni | Voltage Range | Capacity Maintenance Rate |
| Comparative Example 4 | 91.2 | - | 5.0 | 3.8 | - | - | - | 4.1-2.85V | 81.4 |
| Comparative Example 5 | 91.5 | - | 5.5 | 3.0 | - | - | - | 4.1-2.85V | 80.9 |
| Comparative Example 6 | 92.0 | - | 5.7 | 2.3 | - | - | - | 4.1-2.85V | 81.3 |
| Comparative Example 7 | 92.0 | - | 5.7 | 2.3 | - | - | - | 4.2-2.5V | 77.4 |
| Comparative Example 8 | 93.0 | - | 5.7 | 1.3 | - | - | - | 4.2-2.5V | 77.1 |
| Reference Example 1 | 60.0 | 20.0 | - | 20.0 | - | - | - | 4.1-2.85V | 93.2 |
| Reference Example 2 | 60.0 | 20.0 | - | 20.0 | 0.25 | 201ppm | 0.60 | 4.1-2.85V | 93.1 |
| Reference Example 3 | 70.0 | 20.0 | 1.0 | 9.0 | - | - | - | 4.2-2.5V | 94.2 |
| Reference Example 4 | 70.0 | 20.0 | 1.0 | 9.0 | 0.25 | 205ppm | 0.50 | 4.2-2.5V | 94.1 |

As shown in Tables 1A and 1B, any of the test cells in Examples has a higher capacity maintenance rate after the cycle test than the corresponding test cells in Comparative Examples (Example 1 and Comparative Example 1, Example 3 and Comparative Example 2, Example 6 and Comparative Example 3, Example 7 and Comparative Example 4, Example 8 and Comparative Example 5, Example 9 and Comparative Examples 6 and 7, and Example 11 and Comparative Example 8), and has excellent charge-discharge cycle characteristics. In the test cells in Examples, the positive electrode active material containing 0.05 to 0.34 mol% (externally added) of Nb was used, and the coating containing Nb derived from the positive electrode active material was formed on the surface of the negative electrode. In contrast, the test cells in Comparative Examples contained no Nb in the positive electrode active material, and had no coating containing Nb on the surface of the negative electrode. That is, the positive electrode active material containing a specific amount of Nb and the negative electrode coating containing the specific amount of Nb derived from the positive electrode active material significantly improve the charge-discharge cycle characteristics of the battery.

As shown in Reference Examples 1 to 4, when the positive electrode active material with a Ni content of less than 80 mol% and a Co content of 5 mol% or more is used, the capacity maintenance rate after the cycle test does not change even by adding Nb into the positive electrode active material to form the coating containing Nb on the surface of the negative electrode, and thus no effect of improving the charge-discharge cycle characteristics is obtained.

REFERENCE SIGNS LIST

10        Secondary battery
11        Positive electrode
12        Negative electrode
13        Separator
14        Electrode assembly
16        Exterior housing can
17        Sealing assembly

**EP 4 005 980 A1**

| | |
|---|---|
| 18, 19 | Insulating plate |
| 20 | Positive electrode lead |
| 21 | Negative electrode lead |
| 22 | Grooved part |
| 23 | Internal terminal plate |
| 24 | Lower vent member |
| 25 | Insulating member |
| 26 | Upper vent member |
| 27 | Cap |
| 28 | Gasket |

**Claims**

1. A non-aqueous electrolyte secondary battery, comprising:

   a positive electrode;
   a negative electrode; and
   a non-aqueous electrolyte, wherein
   the positive electrode includes a lithium-transition metal composite oxide containing Ni, Nb, and Co that is an optional component;
   in the lithium-transition metal composite oxide,
   a content of Ni is 80 mol% or more based on a total number of moles of metal elements excluding Li,
   a content of Nb is 0.35 mol% or less based on the total number of moles of metal elements excluding Li, and
   a content of Co is 5 mol% or less based on the total number of moles of metal elements excluding Li;
   the negative electrode has: a negative electrode mixture layer including a negative electrode active material; and a coating containing Nb formed on a surface of the negative electrode mixture layer; and
   a content of Nb in the coating based on a total mass of the negative electrode mixture layer and the coating is 10 ppm to 3000 ppm.

2. The non-aqueous electrolyte secondary battery according to claim 1, wherein the lithium-transition metal composite oxide contains 2 mol% or less of Co based on the total number of moles of metal elements excluding Li, or contains substantially no Co.

3. The non-aqueous electrolyte secondary battery according to claim 1 or 2, wherein the content of Ni in the lithium-transition metal composite oxide is 85 mol% or more.

4. The non-aqueous electrolyte secondary battery according to any one of claims 1 to 3, wherein the coating further contains Ni.

5. The non-aqueous electrolyte secondary battery according to claim 4, wherein a mass ratio of Nb to Ni in the coating, Nb/Ni, is 0.3 to 2.

6. The non-aqueous electrolyte secondary battery according to any one of claims 1 to 5, wherein the lithium-transition metal composite oxide further contains at least one of Mn and Al.

13

# Figure 1

**INTERNATIONAL SEARCH REPORT**

| International application No. |
| --- |
| PCT/JP2020/024000 |

A. CLASSIFICATION OF SUBJECT MATTER
C01G 53/00(2006.01)i; H01M 4/13(2010.01)i; H01M 4/505(2010.01)i; H01M 4/525(2010.01)i; H01M 10/052(2010.01)i
FI: H01M10/052; H01M4/525; H01M4/505; H01M4/13; C01G53/00 A
According to International Patent Classification (IPC) or to both national classification and IPC

B. FIELDS SEARCHED

Minimum documentation searched (classification system followed by classification symbols)
C01G53/00; H01M4/13; H01M4/505; H01M4/525; H01M10/052

Documentation searched other than minimum documentation to the extent that such documents are included in the fields searched
Published examined utility model applications of Japan          1922–1996
Published unexamined utility model applications of Japan        1971–2020
Registered utility model specifications of Japan                1996–2020
Published registered utility model applications of Japan        1994–2020

Electronic data base consulted during the international search (name of data base and, where practicable, search terms used)
CAplus/REGISTRY (STN); JST7580 (JDreamIII); JSTChina (JDreamIII)

C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2018/043669 A1 (SUMITOMO METAL MINING CO., LTD.) 08.03.2018 (2018-03-08) claims 1, 13, paragraphs [0037]-[0039], [0108] | 1, 3-6<br>2 |
| X<br>A | JP 2017-107827 A (SUMITOMO METAL MINING CO., LTD.) 15.06.2017 (2017-06-15) claims 1, 19, paragraphs [0032]-[0034], [0103], [0109] | 1, 3-6<br>2 |
| X<br>A | JP 2015-122298 A (SUMITOMO METAL MINING CO., LTD.) 02.07.2015 (2015-07-02) claims 5, 7, paragraphs [0067], [0072] | 1, 3-6<br>2 |
| A | WO 2019/044204 A1 (PANASONIC IP MANAGEMENT CO., LTD.) 07.03.2019 (2019-03-07) entire text | 1-6 |
| A | JP 2009-289726 A (MITSUBISHI CHEMICAL CORP.) 10.12.2009 (2009-12-10) entire text | 1-6 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 August 2020 (27.08.2020) | 15 September 2020 (15.09.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2020/024000

C (Continuation). DOCUMENTS CONSIDERED TO BE RELEVANT

| Category* | Citation of document, with indication, where appropriate, of the relevant passages | Relevant to claim No. |
|---|---|---|
| P, X | JP 2020-004537 A (NICHIA CHEMICAL INDUSTRIES, LTD.) 09.01.2020 (2020-01-09) claims 1-6 | 1, 3-6 |

Form PCT/ISA/210 (continuation of second sheet) (January 2015)

| INTERNATIONAL SEARCH REPORT | | International application No. |
|---|---|---|
| Information on patent family members | | PCT/JP2020/024000 |

| Patent Documents referred in the Report | Publication Date | Patent Family | Publication Date |
|---|---|---|---|
| WO 2018/043669 A1 | 08 Mar. 2018 | CN 109891642 A claims 1, 13, paragraphs [0068]-[0070], [0151] KR 10-2019-0040293 A | |
| JP 2017-107827 A | 15 Jun. 2017 | (Family: none) | |
| JP 2015-122298 A | 02 Jul. 2015 | US 2016/0293952 A1 claims 23, 28, paragraphs [0121], [0128] WO 2015/076323 A1 CN 105765770 A JP 2019-186220 A | |
| WO 2019/044204 A1 | 07 Mar. 2019 | (Family: none) | |
| JP 2009-289726 A | 10 Dec. 2009 | US 2010/0209771 A1 entire text WO 2009/031619 A1 EP 2202828 A1 EP 2466671 A2 KR 10-2010-0063041 A CN 101796672 A CN 102769130 A | |
| JP 2020-004537 A | 09 Jan. 2020 | US 2019/0393484 A1 claims 1-13 | |

Form PCT/ISA/210 (patent family annex) (January 2015)

**EP 4 005 980 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006310181 A
- JP 2009289726 A